Europäisches Patentamt

European Patent Office

Office européen des brevets

(19)

(11) **EP 0 417 854 B1**

(12) **EUROPÄISCHE PATENTSCHRIFT**

(45) Veröffentlichungstag und Bekanntmachung des Hinweises auf die Patenterteilung:
**02.01.1997 Patentblatt 1997/01**

(51) Int Cl.6: **G10L 5/06**

(21) Anmeldenummer: **90202396.9**

(22) Anmeldetag: **10.09.1990**

(54) **Verfahren zur Erkennung von N unterschiedlichen Wortketten in einem Sprachsignal**

Method for recognition of N different successions of words in a speech signal

Procédé pour la reconnaissance de N suites différentes de mots dans un signal de parole

(84) Benannte Vertragsstaaten:
**AT DE FR GB**

(30) Priorität: **15.09.1989 DE 3930889**

(43) Veröffentlichungstag der Anmeldung:
**20.03.1991 Patentblatt 1991/12**

(73) Patentinhaber:
• **Philips Patentverwaltung GmbH**
  **22335 Hamburg (DE)**
  Benannte Vertragsstaaten:
  **DE**
• **Philips Electronics N.V.**
  **5621 BA Eindhoven (NL)**
  Benannte Vertragsstaaten:
  **FR GB AT**

(72) Erfinder: **Steinbiss, Volker**
**D-2080 Pinneberg (DE)**

(74) Vertreter: **Poddig, Dieter, Dipl.-Ing. et al**
**Philips Patentverwaltung GmbH,**
**Röntgenstrasse 24**
**22335 Hamburg (DE)**

(56) Entgegenhaltungen:
**EP-A- 0 285 211**

• **ICASSP'84 (INTERNATIONAL CONFERENCE ON ACOUSTICS, SPEECH, AND SIGNAL PROCESSING, San Diego, California, 19. - 21. März 1984), Band 3, Seiten 35.9.1 - 35.9.4, IEEE, New York, US; J.G. ACKENHUSEN: "The CDTWP: a programmable processor for connected word recognition"**

## Beschreibung

Die Erfindung betrifft ein Verfahren zur Erkennung mindestens einer Wortkette in einem Sprachsignal, aus dem für aufeinanderfolgende Zeitabschnitte charakteristische Testsignale abgeleitet werden, die mit Referenzsignalen einer Anzahl vorgegebener Wörter, die in einem ersten Speicher gespeichert sind, zur Bildung von Unterschiedswerten verglichen werden, die auf summiert werden, wobei die Unterschiedsumme in einem zweiten Speicher zusammen mit einem Hinweis auf die Speicheradresse, bei der die so entstandene Folge von Unterschiedsummen am Anfang eines Wortes begonnen hat, gespeichert wird, und mindestens an Wortgrenzen ein Hinweis auf das gerade beendete Wort und auf die Stelle dessen Beginns in einem dritten Speicher gespeichert wird und am Ende des Sprachsignals ausgehend von mindestens dem Wort, bei dem die kleinste Unterschiedsumme erreicht worden ist, über den dabei gespeicherten Anfang dieses Wortes aus dem dort gespeicherten Hinweis auf das vorhergehende Wort und auf dessen Anfang usw. mindestens eine Wortkette ermittelt wird, sowie eine Anordnung zur Durchführung dieses Verfahrens.

Ein derartiges Verfahren ist bekannt aus der DE-OS 32 15 868. Bei diesem bekannten Verfahren wird das Sprachsignal also mit verschiedenen Wörtern unter Verwendung einer dynamischen Zeitanpassung verglichen, so daß während des Erkennungsprozesses im Verlauf des Sprachsignals parallel mehrere Wortketten entstehen, die eine Ähnlichkeit mit dem Sprachsignal aufweisen, die durch die akkumulierte Unterschiedssumme innerhalb der jeweiligen Wortkette gegeben ist. Beim letzten Sprachsignal werden schließlich eine Anzahl Wortketten beendet, und die Wortkette mit der kleinsten akkumulierten Unterschiedssumme wird als erkannte Wortkette als einzige ausgegeben.

Bedingt durch unterschiedliche Aussprachen, beispielsweise durch teilweises Unterdrücken von Endungen von Wörtern, ist die so ausgegebene Wortkette jedoch manchmal nicht diejenige, die dem gesprochenen Sprachsignal entspricht. Um die Erkennung zu verbessern, sind daher bereits Sprachmodelle bei der Erkennung berücksichtigt worden, die die Auswahl, welches Wort bzw. welche Wörter nach einem gerade beendeten Wort folgen können, gemäß den Regeln der natürlichen Sprache beschränken. Dadurch kann zwar die Zuverlässigkeit einer Erkennung im allgemeinen verbessert werden, jedoch ist es weiterhin leicht möglich, daß durch ähnlich klingende Wörter, deren Folge jeweils den Regeln der natürlichen Sprache entspricht, schließlich eine Wortfolge als erkannter Satz ausgegeben wird, der dem gesprochenen Satz zwar sehr ähnlich ist, jedoch diesen nicht genau wiedergibt, während eine Wortfolge, die eine etwas größere akkumulierte Unterschiedssumme am Ende des Sprachsignals erreicht, tatsächlich der richtige Satz ist. In vielen Fällen ist es daher zweckmäßig, nicht nur die Wortfolge, d.h. den Satz mit größter Ähnlichkeit als einzigen auszugeben, sondern weitere Sätze mit nächst geringerer Ähnlichkeit, insbesondere wenn sich aufgrund anderer Wissensquellen, die z.B. aus Gründen der Komplexität nicht beim Erkennungsvorgang berücksichtigt werden konnten, die als beste ermittelte Wortfolge als falsch herausstellt.

Dies ist mit dem bekannten Verfahren nicht ohne weiteres möglich, da für jedes verglichene Wort am Ende des Sprachsignals nur eine einzige vorhergehende Wortkette gespeichert ist, so daß es nicht möglich ist, verschiedene Wortketten mit nur gering abweichender Ähnlichkeit mit dem Sprachsignal zu ermitteln, die mit demselben Wort enden.

Aufgabe der Erfindung ist es daher, das Verfahren der eingangs genannten Art so auszugestalten, daß mehrere Wortketten mit nächst geringerer Ähnlichkeit zum Sprachsignal ermittelt werden, ohne daß irgendwelche Einschränkungen bezüglich der einzelnen Wortfolgen bestehen außer der Einschränkung, daß sich die einzelnen Wortfolgen in zumindest einem Wort unterscheiden.

Diese Aufgabe wird erfindungsgemäß dadurch gelöst, daß daß zum Erkennen von N unterschiedlichen Wortketten mit größter Ähnlichkeit zum Sprachsignal der dritte Speicher eine Anzahl Speicherplätze mit je mindestens N Teilplätzen enthält, von denen jeder Teilplatz eine erste Stelle für eine Adresse des dritten Speichers, eine zweite Stelle für eine Adresse eines Teilplatzes innerhalb des Speicherplatzes, eine dritte Stelle für eine Angabe eines Wortes und eine vierte Stelle für eine Angabe einer Unterschiedsumme enthält, wobei die Adressen in den ersten beiden Stellen den Hinweis auf den Anfang eines Wortes darstellen, daß für jede Gruppe von Wörtern, von denen mindestens ein Wort bei einem Testsignal das Wortende erreicht, ein neuer Speicherplatz im dritten Speicher adressiert wird, dessen Adresse als Hinweis auf den Anfang jedes möglichen folgenden Wortes bei dessen erstem Referenzsignal im zweiten Speicher gespeichert wird und dessen in die Teilplätze einzuschreibenden Informationen aus Speicherplätzen abgeleitet werden, deren Adressen im zweiten Speicher für diejenigen ersten Wörter gespeichert sind, die beim letzten Testsignal gemeinsam das Ende erreicht haben und die zur selben Gruppe von Wörtern gehören, indem von diesen Teilplätzen nur diejenigen verwendet werden, bei denen die darin gespeicherte Unterschiedsumme, erhöht um den Zuwachs der Unterschiedsumme durch den Vergleich der Referenzsignale des jeweiligen ersten Wortes, am kleinsten ist und die bis dahin durchlaufene Folge von früheren Wörtern einschließlich des momentanen Wortes unterschiedlich ist, bis alle Teilplätze des neuen Speicherplatzes eingeschrieben sind, wobei beim Ableiten der Information für jeweils einen Teilplatz in die erste Stelle die Adresse des Speicherplatzes, aus deren Teilplatz Informationen abgeleitet werden, in die zweite Stelle die Angabe des Teilplatzes, aus dem Information abgeleitet werden, in die dritte Stelle eine Angabe des betreffenden, gerade beendeten ersten Wortes, in die vierte Stelle eine Angabe für die erhöhte Unterschiedsumme eingeschrieben wird, und daß aus dem Inhalt aller Teilplätze des Speicherplatzes, der beim letzten Testsignal des Sprachsignals eingeschrieben worden ist, die verschiedenen Wortketten über die Angabe des Wortes in der dritten Stelle sowie die in den ersten und zweiten Stellen dieser Teilplätze enthaltenen Adressen von Speicherplätzen und dem Inhalt von deren Teilplätzen usw. ermittelt und ausgegeben werden.

Aus "Proc. IEEE Int. Conf. on Acoustics, Speech, and Signal Processing", New York 1988", Seiten 410 - 413 ist ein Algorithmus zur Erkennung zusammenhängender Sprache angegeben, bei dem ebenfalls nicht nur die beste Wortfolge, sondern auch die Wortfolge mit zweitgrößter Ähnlichkeit bestimmt wird. Dabei wird jedoch ein anderes Erkennungsprinzip verwendet, nämlich ein Mehrstufen-Verfahren, und Hinweise auf eine konkrete technische Realisierung, insbesondere auf Zuordnung von Speicherplätzen im einzelnen, fehlen darin vollständig.

Durch das erfindungsgemäße Verfahren wird also der Inhalt des dritten Speichers in bestimmter Weise erweitert, so daß es nunmehr möglich ist, mehrere unterschiedliche Wortfolgen zu bilden, wobei durch die Maßnahmen für das Erzeugen der Informationen für neue Speicherplätze des dritten Speichers gewährleistet wird, daß nur die unterschiedlichen Wortketten mit jeweils größter Ähnlichkeit zum Sprachsignal weiterverfolgt werden. Ferner ist es mit dem erfindungsgemäßen Verfahren möglich, Sprachmodelle zu berücksichtigen, bei denen nach dem Ende eines Wortes also nicht jedes beliebige andere Wort des gesamten Vokabulars folgen kann, sondern es können nur Wörter einer bestimmten Gruppe, d.h. vorzugsweise einer bestimmten syntaktischen Klasse folgen, die durch das gerade beendete Wort bzw. durch dessen Ausgangspunkt bestimmt ist. Damit kann bekanntlich die Erkennungssicherheit wesentlich gesteigert werden.

In dem dritten Speicher kann an jedem Speicherplatz in der vierten Stelle jedes Teilplatzes die Unterschiedssumme selbst gespeichert werden. Eine andere Möglichkeit, die weniger Rechenzeit benötigt, ist nach einer Ausgestaltung der Erfindung dadurch gekennzeichnet, daß an der vierten Stelle des ersten Teilplatzes jedes Speicherplatzes der Absolutwert der Unterschiedsumme und an der vierten Stelle aller folgenden Teilplätze die Differenz der Unterschiedsumme an diesem Teilplatz zu der Unterschiedsumme des ersten Teilplatzes gespeichert ist. Dadurch wird erreicht, daß insbesondere dann, wenn bei einem bestimmten Testsignal nur ein einziges Wort endet, die Differenzen der Unterschiedsummen erhalten bleiben und nur der Absolutwert im ersten Teilplatzentsprechend erhöht werden muß.

Das Ableiten der Information für einen neuen Speicherplatz im dritten Speicher für den Fall, daß beim selben Testsignal mehrere Wörter gleichzeitig enden, erfordert ein Mischen der Teilplätze der zu diesen endenden Wörtern gehörenden Speicherplätze derart, daß schließlich nur die Teilplätze mit den niedrigsten Unterschiedsummen verwendet werden. Eine wirksame Methode, dieses Mischen durchzuführen, ist nach einer weiteren Ausgestaltung der Erfindung dadurch gekennzeichnet,

- daß von einem der Wörter, die beim selben Testsignal das Ende erreichen, aus den Informationen des Speicherplatzes, dessen Adresse mit der Unterschiedsumme dieses Wortes gespeichert ist, weitere Informationen abgeleitet und in einem Speicherplatz mit einer neuen Adresse im dritten Speicher gespeichert werden, und
- daß die Information des entsprechenden Speicherplatzes jedes anderen dieser Wörter je Teilplatz nacheinander mit der Information aller Teilplätze des neuen Speicherplatzes verglichen wird und, wenn zwei miteinander verglichene Teilplätze dieselbe bisher durchlaufene Wortfolge angeben, die Information des Teilplatzes mit der größeren Unterschiedsumme unterdrückt wird und die nicht unterdrückte Information des gerade verglichenen Teilplatzes eines Wortes zwischen solche zwei Teilplätze des neuen Speicherplatzes eingefügt wird, deren Unterschiedsumme größer bzw. kleiner als die Unterschiedsumme des verglichenen Teilplatzes ist, wobei gegebenenfalls die Informationen der Teilplätze des neuen Speicherplatzes um einen Teilplatz verschoben werden.

Auf diese Weise ist kein wiederholtes Durchsuchen der einzelnen Teilplätze jedes endenden Wortes erforderlich, sondern es wird mit einem beliebigen von mehreren gleichzeitig endenden Wörtern begonnen, von dessen Information die einzuschrelbenden Daten der neuen Adresse des dritten Speichers abgeleitet werden, und dann werden die von den Informationen der weiteren, gleichzeitig endenden Wörter abgeleiteten Daten an den neuen Speicherplatz eingefügt, wobei bisherige Daten dieses neuen Speicherplatzes gelöscht werden bzw. herausgeschoben werden, bis schließlich alle gleichzeitig endenden Wörter der gleichen Gruppe verarbeitet sind. Dadurch wird der Zeitaufwand für das Zusammenfügen der Daten von mehreren gleichzeitig endenden Wörtern gering gehalten.

Für die Prüfung, ob für zwei verglichene Informationen von zwei Teilplätzen die bis dahin durchlaufene Folge von früheren Wörtern unterschiedlich ist, muß jeweils die Kette von Speicherplätzen des dritten Speichers, die sich aus den Angaben an der ersten und der zweiten Stelle der Teilplätze ergeben, durchlaufen werden. Dies kann nach einer weiteren Ausgestaltung der Erfindung dadurch vereinfacht werden,

- daß in einen vierten Speicher bei jedem Einschreiben von Informationen in einen Teilplatz des dritten Speichers eine Angabe der um das gerade beendete Wort verlängerten bisher durchlauf enen Wortkette an einer neuen Adresse gespeichert wird, die in dem eingefügten Teilplatz an der dritten Stelle anstelle eines Hinweises auf das beendete Wort gespeichert wird, wobei die bisher durchlaufene Wortkette über die Adresse des vierten Speichers, die in dem Teilplatz gespeichert ist, aus dem die Information für den einzufügenden Teilplatz abgeleitet wird, ermittelt wird.

Dafür ist zwar ein weiterer Speicher, nämlich ein vierter Speicher erforderlich, jedoch braucht zum Prüfen, ob zwei verglichene Wortketten gleich sind, nur der entsprechende Eintrag in diesem Speicher untersucht zu werden. Damit wird eine erhebliche Verarbeitungszeit eingespart. Außerdem können am Ende des Sprachsignals die Wortketten mit größter Ähnlichkeit unmittelbar aus diesem vierten Speicher ausgegeben werden, ohne daß die Wortketten durch Zurückverfolgen von Verweisen bzw. Angaben in der ersten und zweiten Stelle der Teilplätze ermittelt werden müssen.

Eine Anordnung zur Durchführung des erfindungsgemaßen Verfahrens mit mit einer Sprachsignal-Verarbeitungseinrichtung zum Ableiten charakteristischer Testsignale, mit einem ersten Speicher zum Speichern von Referenzsignalen für zu erkennende Wörter, mit einer Vergleichsanordnung zum Vergleichen jedes Testsignals mit Referenzsignalen zum Erzeugen von Unterschiedswerten und zum Erzeugen von Unterschiedsummen aus aufaddierten Unterschiedswerten, mit einem zweiten Speicher zum Aufnehmen von Unterschiedsummen und Hinweisen auf den Anfang der Folge von Unterschiedsummen beim betreffenden Wort, mit einem dritten Speicher, der bei Erreichen eines Wortendes den Hinweis auf den Anfang der Folge von Unterschiedsummen und einen Hinweis auf das gerade beendete Wort speichert, ist dadurch gekennzeichnet, daß der dritte Speicher für jeden bei Erreichen eines Wortendes neu adressierten Speicherplatz mehrere Teilplätze mit je vier Speicherstellen aufweist, daß eine Verarbeitungsanordnung vorgesehen ist, die für alle zur gleichen Gruppe von Wörtern gehörenden, beim selben Testsignal endenden Wörter denselben Speicherplatz im dritten Speicher adressiert und in die einzelnen Teilplätze Informationen einschreibt, die aus dem ausgelesenen Inhalt der Teilplätze von solchen Speicherplätzen abgeleitet sind, auf deren Speicheradresse der zu dem jeweiligen beendeten Wort gehörige Eintrag im zweiten Speicher hinweist, wobei die Verarbeitungsanordnung nur aus solchen Teilplätzen Informationen ableitet, bei denen die darin gespeicherte Unterschiedsumme, erhöht um den Zuwachs der Unterschiedsumme durch den Vergleich der Referenzsignale des jeweiligen ersten Wortes, am kleinsten ist und die bis dahin durchlaufene Folge von früheren Wörtern einschließlich des momentanen Wortes unterschiedlich ist.

Ausführungsbeispiele der Erfindung werden nachfolgend anhand der Zeichnung erläutert. Darin zeigen:

Fig. 1 ein Diagramm für die Ermittlung einer einzigen Wortkette,

Fig. 2a und 2b den Aufbau der Speicherplätze des dritten Speichers gemäß dem Verfahren nach der Erfindung und die Zurückverfolgung von Wortketten daraus,

Fig. 3 einen Ausschnitt aus einem Graphen eines Sprachmodells,

Fig. 4 ein schematisches Diagramm für die Bildung der Informationen eines neuen Speicherplatzes des dritten Speichers,

Fig. 5 die mögliche Verkettung von Wortfolgen, die bei einem beispielsweise angenommenem Sprachsignal entsteht,

Fig. 6 symbolisch den Inhalt des vierten Speichers, der zur Verkettung von Wörtern gemäß Fig. 5 gehört,

Fig. 7 ein Blockschaltbild einer Anordnung zur Durchführung des erfindungsgemäßen Verfahrens.

Aus dem Sprachsignal, das untersucht werden soll, werden in allgemein regelmäßigen Zeitpunkten, die einen Abstand von z.B. 10 ms bis 20 ms haben, Testsignale gewonnen. Diese können beispielsweise das Kurzzeitspektrum des Sprachsignals, die Sprachgrundfrequenz, die Lautstärke oder ähnliche Werte sein, die für die Worterkennung speziell aufbereitet sein können. Die Gewinnung solcher Testsignale ist bekannt und nicht Gegenstand der Erfindung.

Von dem Sprachsignal ist bekannt, daß es aus einzelnen Wörtern zusammengesetzt ist, die aus einem vorgegebenen Vokabular stammen. Die Wörter des Vokabulars entsprechen einem Satz von K Folgen von Referenzsignalen, die aus einzeln gesprochenen Worten gewonnen werden. Die Folgen der Referenzsignale und damit die Wörter werden mit dem Index $k = 1, ... K$ bezeichnet. Die einzelnen Referenzsignale innerhalb einer Folge k werden mit $j = 1, ... J(k)$ bezeichnet, wobei $J(k)$ die Länge der Folge k von Referenzsignalen ist.

Das endgültige Ziel der Erkennung der Wörter in einer zusammenhängenden Wortkette ist die Bestimmung mehrerer Aufeinanderfolgen von Folgen von Referenzsignalen, die am besten mit der Folge der aus dem Sprachsignal gewonnenen Testsignalen übereinstimmen.

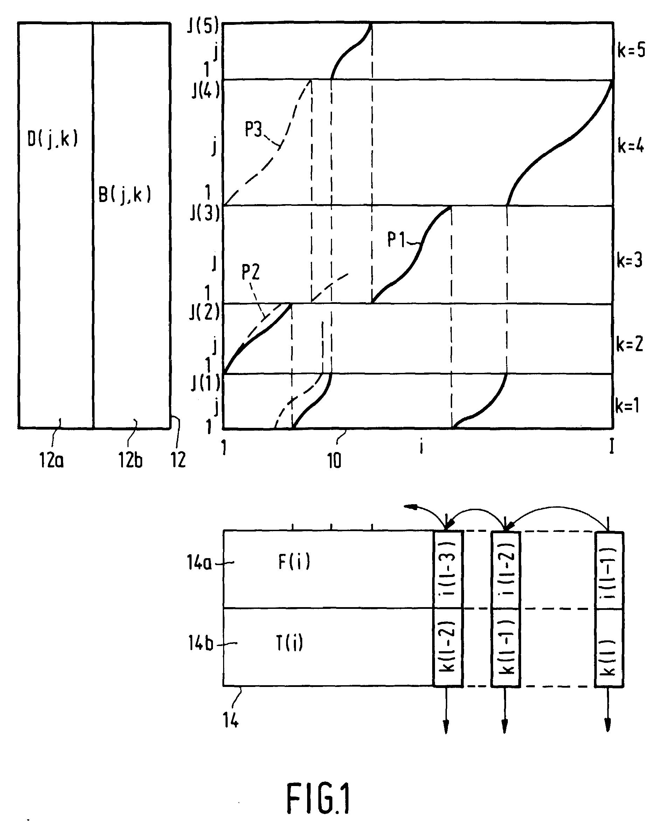

Das aus der bereits genannten DE-OS 32 15 868 bekannte Verfahren zum Auffinden einer einzigen Wortfolge größter Übereinstimmung mit dem Sprachsignal soll anhand der Fig. 1 näher erläutert werden. Die Testsignale i des Sprachsignals und die Referenzsignale j der einzelnen Folgen k (es sind hier beispielsweise fünf Folgen für fünf Wörter angenommen, die von 1 bis 5 numeriert sind) bestimmen ein Netz 10 von Rasterpunkten (i,j,k). Jedem Rasterpunkt ist ein lokaler Unterschiedswert d(i,j,k) zugeordnet, der ein Maß für die Abweichung bzw. den Unterschied zwischen den entsprechenden akustischen Ergebnissen angibt. Das Problem der Erkennung von zusammenhängenden Wortketten kann darauf zurückgeführt werden, den Weg durch das Netz von Rasterpunkten (i, j, k) zu finden, der die beste Übereinstimmung zwischen den Testsignalen und der unbekannten Aufeinanderfolge von Folgen von Referenzsignalen angibt. Dies kann auch so ausgedrückt werden, daß die Summe der Unterschiedswerte d(i, j, k), gegebenenfalls erhöht um einen von der Richtung des jeweils vorhergehenden Rasterpunkts abhängigen Zeitverzerrungswert, für alle Rasterpunkte auf diesem Wege ein Minimum ist. Ausgehend von diesem optimalen Weg kann die Aufeinanderfolge der Folgen von Referenzsignalen eindeutig ermittelt werden, wie aus Fig. 1 hervorgeht.

Die Bestimmung des optimalen Weges erfolgt über die nichtlineare Zeitanpassung der Folge der Testsignale an die einzelnen Folgen der Referenzsignale. Dabei wird die Tatsache ausgenutzt, daß der optimale Weg durch einen Rasterpunkt (i, j, k) auch als Teil den diesem Rasterpunkt vorhergehenden optimalen Teilweg umfaßt. Dafür wird die minimale Unterschiedsumme D(i, j, k) entlang aller Wege zu dem Rasterpunkt (i, j; k) bestimmt. Da diese Unterschiedsumme die Summe der lokalen Unterschiedswerte ist, kann sie einfach schrittweise als die Summe der Unterschiede entlang dem optimalen Weg zu einem vorhergehenden Punkt und dem lokalen Unterschiedswert des Rasterpunktes (i, j, k) bestimmt werden. Für den optimalen Weg muß dann der vorhergehende Punkt mit der minimalen Unterschiedsumme bestimmt werden. Auf diese Weise ergibt sich als Übergangsregel für Übergänge innerhalb einer Folge von Referenzsignalen bei dem bekannten Verfahren ohne Berücksichtigung von Zeitverzerrungswerten

$$D(i,j,k)= d(i,j,k) + \min D(i\text{-}1,j,k), D(i\text{-}1,j\text{-}1,k), D(i,j\text{-}1,k)$$

Da der optimale Weg zunächst noch nicht bekannt ist, werden durch die vorstehende Gleichung eine größere Anzahl von Wegen gebildet, von denen in Fig. 1 außer dem am Ende sich als optimal herausstellender Weg P1 auch beispielsweise die Wege P2 und P3 angedeutet sind. Tatsächlich entsteht, wenn keine Schwelle für die Unterschiedsumme verwendet wird, zu jedem Referenzwert aller Folgen ein eigener Weg, wobei sich diese Wege allerdings gemäß dem Optimalitätsprinzip von Bellman nicht kreuzen, insbesondere auch nicht an Wortgrenzen.

Um für ein Testsignal die Unterschiedsumme für alle Referenzsignale zu bestimmen, ist nur ein kleiner Teil der vollständigen Matrix von Unterschiedsummen der vorhergehenden Punkte notwendig, nämlich nur die zu dem vorhergehenden Testsignal i-1 gehörenden Unterschiedsummen, wie sich aus der obenstehenden Gleichung ergibt. Diese Unterschiedsummen D(j,k) werden in einem symbolisch als Block 12 dargestellten Speicher, und zwar in einem Bereich 12a, gespeichert und bei jedem neuen Testsignal jeweils überschrieben.

Es ist jedoch zusätzlich noch eine Möglichkeit der Zurückverfolgung des optimalen Weges notwendig, und zwar für die Punkte des Weges an den Übergängen von jeweils einer Folge von Referenzsignalen auf eine andere, d.h. an den Wortgrenzen. Da es das endgültige Ziel des bekannten Verfahrens ist, die unbekannte Aufeinanderfolge von Wörtern bzw. Folgen von Referenzsignalen in dem Sprachsignal zu bestimmen, ist es ausreichend zu ermitteln, bei welchem Testsignal ein beim Endpunkt einer Folge von Referenzsignalen endender Teilweg begonnen hat. Die Einzelheiten des Teilweges innerhalb der Folge von Referenzsignalen sind dagegen für die Worterkennung in einer Wortkettenicht von Bedeutung. Der Endpunkt des Teilweges des optimalen Weges am Ende jeweils einer Folge von Referenzsignalen ist zunächst jedoch noch nicht bekannt, daher muß die Information zur Zurückverfolgung während des ganzen Zeitanpassungsvorgangs aufgezeichnet werden. Für jeden Rasterpunkt (i,j,k) hat der optimale Weg einen eindeutigen Startpunkt beim ersten Referenzsignal j=1 innerhalb dieser Folge k. Daher kann für jeden Rasterpunkt ein Rückwärtszeiger B(i,j,k) bestimmt werden als die Adresse des Testsignals, von dem der beste Weg zu diesem Rasterpunkt (i,j,k) begonnen hat.

Auf diese Weise ist wie bei den Unterschiedsummen nur jeweils die Speicherung einer Spalte von Rückwärtszeigern B(j,k) notwendig, d.h. für jedes Referenzsignal j jeder der Folgen k ist nur ein Speicherplatz 12a für die Unterschiedsumme und ein Speicherplatz 12b für den Ruckwärtszeiger erforderlich. Dies ist in Fig. 1 links dargestellt.

Für die Zurückverfolgung muß jedoch nicht der Anfang des Teilweges in der jeweiligen Folge, sondern das Ende des vorhergehenden Teilweges ermittelt werden, das jedoch, wie bereits erwähnt, unmittelbar vor dem Anfang des letzten Teilweges liegt. Das bekannte Verfahren ist daher dadurch vereinfacht, daß im Rückwärtszeiger B(j,k) nicht die Testsignaladresse des Anfangs, sondern gleich direkt die Testsignaladresse des vorhergehenden Endpunktes gespeichert ist.

Wie bereits erwähnt, sind nur die Rückwärtszeiger an den Endpunkten, d.h. den letzten Referenzsignalen J(k) der einzelnen Folgen k von Interesse, damit die Folge der Wörter entlang des optimalen Weges zurückverfolgt werden kann, denn die Rückwärtszeiger B(J(k),k) an den Endpunkten geben wiederum den Endpunkt der jeweils vorhergehenden Folge an. Die im Speicher 12 gespeicherten Rückwärtszeiger an diesen Endpunkten werden jedoch bei der Verarbeitung des nächsten Testsignals wieder überschrieben, so daß ein gesonderter Speicher notwendig ist, der die Rückwärtszeiger an den Endpunkten der einzelnen Folgen von Referenzsignalen speichert. Da solche Endpunkte bei jedem Testsignal i auftreten können, jedoch zumindest ohne Berücksichtigung eines Sprachmodells nur einer wegen des erwähnten Optimalitätsprinzips, muß dieser gesonderte Speicher für jedes Testsignal einen Speicherplatz für einen Rückwärtszeiger haben. Dieser gesonderte Speicher ist in Fig. 1 unterhalb der Matrix 10 symbolisch als Block 14 angegeben, und in dem Bereich 14a dieses Speichers wird immer der Rückwärtszeiger B(J(k),k) in Form der Testsignaladresse F(i) des vorhergehenden Endpunktes gespeichert, bei dem die Unterschiedsumme D(J(k),k)am kleinsten ist.

Da aber nicht die Endpunkte selbst der einzelnen Teilwege des optimalen Weges innerhalb jeweils einer Folge von Referenzsignalen von Interesse sind, sondern das der jeweiligen Folge zugeordnete Wort, müssen die diese Wörter angebenden Ordnungsnummern der Folgen der Referenzsignale ebenfalls gespeichert werden, und zwar zusammen mit den jeweiligen Anfangsadressen F(i). Die so gespeicherten Ordnungsnummern der Folgen werden mit T(i) bezeichnet und sind die Ordnungsnummern derjenigen Folgen k, an deren Endpunkten J(k) die gegenüber allen anderen Folgen beim gleichen Testsignal die kleinste Unterschiedssumme D(J(k),k) auftritt.

Aus Fig. 1 ist dann zu erkennen, daß sich aus den beim letzten Testsignal 1 gespeicherten Werten die Testsignaladresse i(l-1) des Endpunkts der vorhergehenden Folge und die Ordnungsnummer k(l) der letzten Folge ergibt. In gleicher Weise ergeben die anderen gespeicherten Testsignaladressen F(i) unmittelbar die Adressen, an denen die Ordnungsnummer k(l-1), k(l-2)... der jeweils vorhergehenden Folge sowie die Testsignaladresse i(l-2), i(l-3)... des Endes der davor endenden Folge enthalten sind, wie durch die Pfeile angedeutet ist, die die Speicherplätze i(l-1), i(l-2), i(l-3) usw. des Speichers 14 verbinden.

Dieses Verfahren ist nicht ohne weiteres mehr verwendbar, wenn ein Sprachmodell verwendet wird, bei dem es also eintreten kann, daß bei demselben Testsignal zwei oder mehr Folgen von Referenzsignalen gleichzeitig enden, die aufgrund des Sprachmodells nur mit bestimmten anderen Folgen fortgesetzt werden können. In diesem Falle kann nicht das Ende einer Folge mit der kleinsten Unterschiedsumme als einzige festgehalten und fortgesetzt werden, sondern eine andere Folge, die mit einer größeren Unterschiedsumme endet, kann aufgrund der später folgenden besseren Anpassung an das Sprachsignal schließlich eine kleinere Unterschiedsumme am Ende ergeben. Dieses Problem kann jedoch leicht dadurch gelöst werden, indem der Speicher 14 in Fig. 1 gesondert adressiert wird, d.h. nicht durch die Folge der Testsignale, wobei dann im Abschnitt 14a die entsprechenden Adressen des Speichers 14 gespeichert werden müssen, die also durchaus von der in dem betreffenden Augenblick aktuellen Ordnungsnummer des Testsignals abweichen kann.

Größere Probleme treten jedoch auf, wenn nicht nur die Wortfolge mit größter Ähnlichkeit zum Sprachsignal, d.h. mit kleinster Unterschiedsumme am Ende, sondern auch die Wortfolgen mit nächst geringerer Ähnlichkeit mit dem Sprachsignal und damit mit nächst größerer Unterschiedsumme bestimmt und ausgegeben werden sollen. In diesem Falle können nämlich bei demselben Testsignal mehrere Wörter derselben syntaktischen Gruppe enden, die Wortfolgen mit aufeinanderfolgend größeren Unterschiedsummen darstellen und die somit gespeichert werden müssen, bis am Ende feststeht, welches tatsächlich die N besten Wortfolgen mit größter Ähnlichkeit zum Sprachsignal sind.

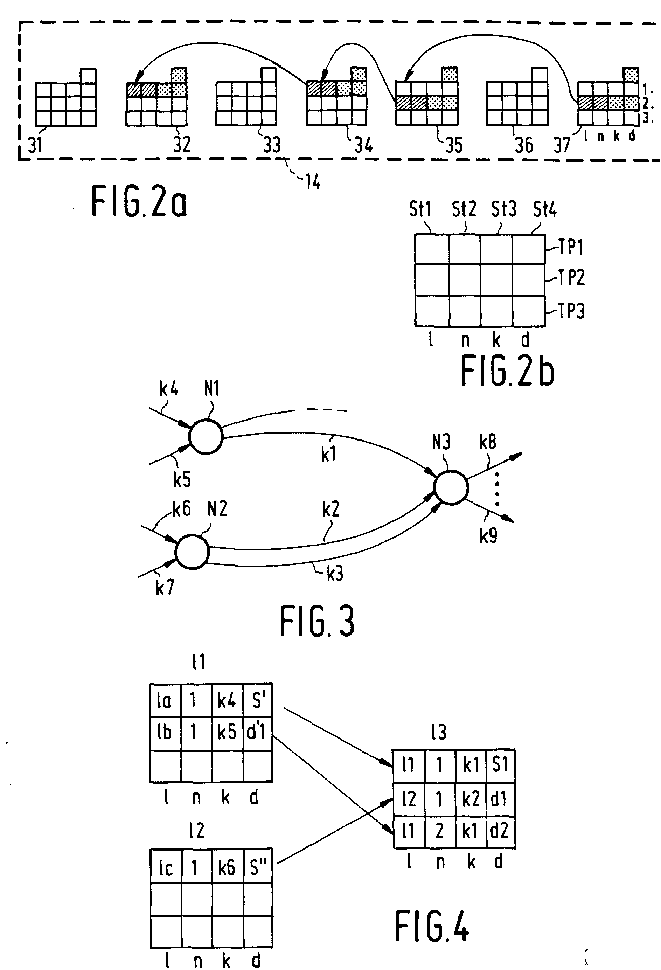

Eine Speicherorganisation eines Speichers, die dem Speicher 14 in Fig. 1 entspricht, ist in Fig. 2a angedeutet. Diese zeigt schematisch eine Anzahl Speicherplätze 31 bis 37 dieses Speichers für die Rückwärtszeiger, von denen jeder drei Teilplätze mit je mehreren Stellen für die Ermittlung der drei besten Wortfolgen aufweist. In Fig. 2b ist ein einzelner Speicherplatz näher angegeben. In diesem Beispiel enthält also jeder Speicherplatz mit seiner Aufteilung drei Teilplätze TP1, TP2 und TP3, von denen jeder vier Speicherstellen St1, St2, St3 und St4 enthält. Damit können also die drei besten Wortfolgen ermittelt werden. Wenn auch noch die nächst schlechteren Wortfolgen ermittelt werden sollen, müssen entsprechend mehr Teilplätze vorgesehen werden, während die Anzahl der Stellen unverändert bleibt. Dabei geben die Informationen im ersten Teilplatz TP1 die beste Wortfolge mit größter Ähnlichkeit zum Sprachsignal an, der Teilplatz TP2 gibt die zweitbeste Wortfolge mit nächst größerer Unterschiedsumme an, und entsprechendes gilt für die folgenden Teilplätze. In benachbarten derartigen Speicherplätzen dieses Speichers, die also bei benachbarten Testsignalen oder bei Wörtern anderer syntaktischer Gruppen, die beim selben Testsignal enden, eingeschrieben wurden, können selbstverständlich Wortfolgen mit wesentlich größeren oder auch wesentlich kleineren Unterschiedsummen enthalten sein, da die optimale Folge erst am Ende des Sprachsignals bestimmt werden kann.

Der Inhalt der einzelnen Stellen hat folgende Bedeutung. Die Stelle St1 enthält die Adresse 1 eines vorhergehenden Speicherplatzes dieses Speichers, die sich aus dem gerade endenden Wort ergibt. Die Stelle St2 gibt den Teilplatz n in dem Speicherwort an, dessen Adresse in der Stelle St1 enthalten ist und aus dem die Information des betreffenden Teilplatzes in einer Weise abgeleitet ist, die später erläutert wird. Für die Stelle St3 wird zunächst angenommen, daß dort die Ordnungsnummer k der Folge der Referenzsignale, d.h. desjenigen Wortes, das momentan beendet wurde, gespeichert ist. Die Stelle St4 enthält schließlich die Unterschiedsumme, die mit dem gerade beendeten Wort und der diesem vorausgehenden Wortkette erreicht worden ist.

In Fig. 2a ist angenommen, daß an den Speicherplätzen 31 bis 37 in einer zusätzlichen Speicherstelle, die bei jedem einen Speicherplatz darstellenden Block rechts oben angegeben ist, die kleinste Unterschiedsumme aller Teilplätze dieses Speicherplatzes gespeichert ist, und an der Stelle St4 aller Teilplätze ist dann lediglich die Differenz der zugehörigen Unterschiedsumme zu dieser kleinsten Unterschiedsumme gespeichert. Da in diesem Falle aber an der Stelle St4 des ersten Teilplatzes TP1 grundsätzlich der Wert Null enthalten ist, da der Teilplatz TP1 ja voraussetzungsgemäß die kleinste Unterschiedsumme aufweist, kann diese Stelle St4 des ersten Teilplatzes TP1 auch dazu verwendet werden, den absoluten Wert der kleinsten Unterschiedsumme dieses Speicherplatzes zu speichern, während lediglich in den Teilplätzen TP2 und folgende an der Stelle St4 der Unterschied d der zum jeweiligen Teilplatz gehörenden Unterschiedsumme zu dieser kleinsten Unterschiedsumme gespeichert wird. Dadurch ist tatsächlich die bei den Blöcken 31 bis 37 in Fig. 2a angegebene zusätzliche Speicherstelle für die kleinste Unterschiedsumme nicht erforderlich.

Das Zurückverfolgen der einem endenden Wort vorausgehenden Wortkette, wobei dieses endende Wort auch das Ende des Sprachsignals sein kann, ist in Fig. 2a beispielsweise mit Pfeilen angegeben. Die beim Speicherplatz 37 aufgrund der Unterschiedsumme als zweitbeste festgestellte Wortkette wird als dadurch ausgegeben, daß in der zweiten Zeile des Speicherplatzes 37 an der dritten Stelle die Ordnungsnummer k des zuletzt endenden Wortes ausgegeben wird, und aus der Adresse 1 an der ersten Stelle der zweiten Zeile wird der Speicherplatz 35 adressiert, und zwar der zweite Teilplatz aufgrund der entsprechenden Angabe n an der zweiten Stelle des zweiten Teilplatzes des Speicherplatzes 37, und es kann die an der dritten Stelle des zweiten Teilplatzes im Speicherplatz 35 gespeicherte Ordnungsnummer des vorhergehenden Wortes ausgegeben werden. Ferner wird durch die Adresse an der ersten Stelle des zweiten Teilplatzes im Speicherplatz 35 der Speicherplatz 34 adressiert, und zwar aufgrund der entsprechenden Information an der zweiten Stelle des Speicherplatzes 35 der erste Teilplatz des Speicherplatzes 34, und in diesem Sinne wird der weitere Weg zurückverfolgt bis zum Anfang, d.h. bis zum ersten Teilplatz des Speicherplatzes 32, bei dem das erste Wort der zweitbesten Wortkette geendet hat. Tatsächlich liegen zwischen den Speicherplätzen 30 bis 37 noch weitere Speicherplätze, die zu anderen Wortketten gehören, von denen hier nur beispielsweise die Speicherplätze 31, 33 und 36 angegeben sind.

Die beim Speicherplatz 37 ermittelte Wortkette mit der kleinsten Unterschiedsumme kann beispielsweise in der vorstehend beschriebenen Weise über die Speicherplätze 36, 35, 33 und 31 verlaufen, und zwar jeweils über den ersten Teilplatz, da eine Wortkette, die einmal durch den zweiten Teilplatz eines Speicherplatzes verläuft, im weiteren Verlauf des Sprachsignals nicht mehr durch den ersten Teilplatz eines Speicherplatzes verlaufen kann, sondern nur durch Teilplätze gleicher oder höherer Ordnungszahl.

Die Erzeugung bzw. Ableitung der Information für jeden neuen Speicherplatz entsprechend den in Fig. 2a dargestellten Speicherplätzen soll anhand der Fig. 3 und 4 näher erläutert werden. Dabei wird von einem Sprachmodell in Form eines Graphen aus Knoten und Übergängen dazwischen ausgegangen, wobei die Knoten als Sammelpunkte für alle Übergänge aufgefaßt werden können, die alle in der gleichen Weise fortgesetzt werden. In Fig. 3 ist nun ein Ausschnitt aus einem solchen Sprachmodell angegeben, der drei Knoten N1, N2 und N3 umfaßt, wobei der Knoten N1 von zwei Wörtern oder, wie dies bei Sprachmodellen üblich bezeichnet wird, von zwei Übergängen k4 und k5 erreicht wird. Die Verwendung der Bezeichnung Übergänge ist zweckmäßiger, da ein und dasselbe Wort durch zwei oder mehr verschiedene Übergänge dargestellt sein kann, d.h. an verschiedenen Stellen des Sprachmodells wiederholtauftauchen kann, während Übergänge eindeutig sind.

In entsprechender Weise wird der Knoten N2 von den Übergangen k6 und k7 erreicht. Tatsächlich werden die meisten Knoten von mehr Übergängen erreicht, wenn das zugelassene Vokabular umfangreicher ist.

Von jedem Knoten gehen nun weitere Übergänge aus, d.h., daß beispielsweise der Übergang k4 im Sprachmodell nur mit bestimmten weiteren Übergängen fortgesetzt werden kann, von denen in Fig. 3 der Übergang k1 näher angegeben ist. Dies gilt auch für den Übergang k5. Entsprechend können die Übergänge k6 und k7 hier beispielsweise nur mit den Übergängen k2 und k3 fortgesetzt werden. Es sei bemerkt, daß die beiden Knoten N1 und N2 durch die entsprechenden Übergänge nicht unbedingt gleichzeitig erreicht werden, wobei andererseits jedoch auch zu berücksichtigen ist, daß aufgrund der verwendeten dynamischen Zeitanpassung und der dadurch entstehenden mehreren Wege durch jeden einzelnen Übergang dessen Ende zu verschiedenen, meist aufeinanderfolgenden Testsignalen wiederholt erreicht wird.

Die Übergänge k1, k2 und k3 gehen nun auf den Knoten N3, d.h. es folgen Wörter entsprechend den Übergängen k8 bis k9. Abhängig vom Sprachmodell kann nach dem Knoten N1 außerdem mit einem anderen Übergang ein anderer Knoten erreicht werden, d.h. ein bis zum Knoten N1 bereits verlaufener Satzteil kann auf zwei oder mehr verschiedene grammatische Weisen fortgesetzt werden, jedoch betrifft dies Einzelheiten des jeweils verwendeten Sprachmodells, die hier nicht näher untersucht werden sollen. Grundsätzlich wäre es auch möglich, das beschriebene Verfahren ohne Verwendung eines Sprachmodells anzuwenden, d.h. das Sprachmodell besteht dann aus nur einem einzigen Knoten, und sämtliche Übergänge aus diesem Knoten führen zu diesem zurück.

Aus Fig. 3 gehen nun keine Zeitbedingungen hervor, d.h. diese Figur zeigt nicht, wann bzw. bei welchem Testsignal ein Übergang einen Knoten erreicht. Es wird jetzt jedoch angenommen, daß die Übergänge k1 und k2 gleichzeitig, d.h. beim selben Testsignal, den Knoten N3 erreichen. Damit laufen in der Matrix entsprechend Fig. 1 nun an einem Punkt mehrere Wege zusammen, die bisher durchlaufene Wortfolgen mit unterschiedlicher Ähnlichkeit zum tatsächlichen bisherigen Sprachsignal angeben und von denen ein Teil dieser Wege fortgesetzt werden muß, wobei eine Rückwärtsverfolgung vom Ende her möglich sein muß. Die Anzahl der Wege, die fortgesetzt werden muß, ist gleich der Anzahl der Wege in jedem auf dem Knoten N3 endenden Übergang, d.h. die Gesamtzahl der Wege muß reduziert werden.

Diese Reduktion unter Aufrechterhaltung der Möglichkeit der Zurückverfolgung soll anhand der Fig. 4 näher erläutert werden. Dies betrifft also insbesondere den Speicher für die jeweiligen Anfangsadressen der einzelnen Folgen zum Zurückverfolgen der anhand des Sprachsignals ermittelten Wortfolgen mit größter Ähnlichkeit, d.h. entsprechend dem Speicher 14 in Fig. 1. Jeder Übergang, der eindeutig einem Wort und damit einer Folge von Referenzsignalen zugeordnet ist, führt mit seinem im Bereich 12b des Speichers 12 in Fig. 1 gespeicherten Rückwärtszeiger B(j,k) die entsprechende Adresse des Speicherplatzes im Speicher 14 mit, der beim Anfang dieses Überganges aufgebaut wurde. Beim Übergang k1 möge dies die Adresse I1 und beim Übergang k2 möge dies die Adresse I2 sein.

Mit dem Enden der Übergänge k1 und k2 wird nun ein neuer Speicherplatz im Speicher 14 eingeschrieben, der die Adresse I3 hat. Am einfachsten wird dafür der nächste freie Speicherplatz gewählt.

Der Inhalt des Speicherplatzes I3, d.h. die darin einzuschreibende Information, wird zunächst aus dem Speicherplatz I1 abgeleitet, dessen Adresse, wie bereits erwähnt, am Ende des Übergangs k1 dem Speicher 12b entnommen wird. In diesem Speicherplatz I1 sind an den ersten Stellen aller Teilplätze die jeweils vorhergehenden Adressen in diesen Speicher gespeichert, von denen hier beispielsweise die Adressen Ia und Ib angegeben sind. Der Inhalt der zweiten Stellen gibt an, aus welchem Teilplatz der Adressen Ia bzw. Ib die betreffenden Werte abgeleitet sind, d.h. in diesem Beispiel bei beiden Speicherplätzen aus dem ersten Teilplatz. An der dritten Stelle ist die Ordnungsnummer des zugehörigen Übergangs, aus dem die Information des Teilplatzes entstanden ist, wie nachfolgend erläutert wird, eingetragen, d.h. der Übergang k4 hat die kleinere Abstandssumme S' ergeben, während der Übergang k5 eine um den Wert d'1 größere Unterschiedsumme ergeben hat. Diese Adresse I1 wird mit allen vom Knoten N1 beim selben Testsignal ausgehenden Übergängen mitgeführt, jedoch wird hier nur der Übergang k1 betrachtet. Die Unterschiedsumme S' wird als Wert D(j, k) aller von Knoten N1 ausgehenden Übergänge und damit auch des Übergangs k1 am Anfang, d.h. vor dem Vergleich des ersten Referenzsignals des Übergangs k1 mit dem momentanen Testsignal, verwendet und im Verlauf des Übergangs bei den folgenden Vergleichen von Testsignalen mit ßeferenzsignalen entsprechend der dynamischen Zeitanpassung erhöht.

Am Ende des Übergangs k1 hat die zugehörige Größe D(J(k1),k1) den Wert S1 erreicht, der im Speicherplatz I3 im ersten Teilplatz an der vierten Stelle eingetragen wird. Die dritte Stelle dieses Teilplatzes erhält die Ordnungsnummer k1, während die zweite Stelle die Nummer des Teilplatzes des vorhergehenden Speicherplatzes I1 erhält, aus dem die Information abgeleitet wird, d.h. den Wert 1. An der ersten Stelle des ersten Teilplatzes wird schließlich die Adresse I1 eingetragen. In entsprechender Weise werden der zweite und der dritte Teilplatz eingeschrieben, wobei in dem in Fig. 4 dargestellten Beispiel die Information des ursprünglich zweiten Teilplatzes auf den dritten Teilplatz geschoben ist, da im zweiten Teilplatz die Information aus dem zweiten, gleichzeitig endenden Übergang k2, nämlich aus dem Speicherplatz mit der mit diesem Übergang gespeicherten Adresse I2, und zwar aus dem ersten Teilplatz, anschließend eingefügt worden ist, da die Abstandssumme S'', erhöht um die Unterschiedswerte entlang des Übergangs k2, kleiner sei als die Unterschiedsumme, die zunächst im zweiten Teilplatz des Speicherplatzes I1 stand. Die absolute Unterschiedsumme am Ende des Übergangs k2 wird dabei auf die Unterschiedsumme S1 des ersten Teilplatzes bezogen und ergibt die Differenz d1, während der Differenzwert d'1 aus dem zweiten Teilplatz des Speicherplatzes I1 direkt dem in der letzte Stelle des dritten Teilplatzes des Speicherplatzes I3 gespeicherten Differenzwert d2 entspricht. Der ursprüngliche Inhalt des dritten Teilplatzes des Speicherplatzes I3, der aus dem dritten Teilplatz des Speicherplatzes I1 entstanden war, ist dabei durch das Einfügen aus dem Speicherplatz I3 herausgeschoben worden, da er eine zu große Unterschiedssumme angab. Entsprechend sind aus den zweiten und dritten Teilplätzen des Speicherplatzes I2 keine Information für den Speicherplatz I3 abgeleitet worden.

Die Adresse I3 wird als Rückwärtszeiger B(1,k) bei dem ersten Referenzwert jedes der vom Knoten N3 ausgehenden Übergänge k8 bis k9 gespeichert und dadurch weitergereicht, und entsprechend wird aus der Unterschiedssumme S1 und dem Vergleich mit dem ersten Referenzsignal jedes der Übergänge der entsprechende Wert D(1,k) gebildet.

Es sei darauf hingewiesen, daß in dem Fall, wenn bei dem betrachteten Testsignal noch gleichzeitig wenigstens ein weiterer Übergang endet, der auf einem anderen als dem Knoten N3 endet, ein weiterer Speicherplatz, z.B. mit der Adresse I4, angelegt werden muß, für den die einzuschreibende Information in der gleichen Weise wie vorstehend beschrieben abgeleitet wird. Allgemein gilt, daß für jeden Knoten, auf den bei demselben Testsignal wenigstens ein Übergang endet, ein Speicherplatz angelegt werden muß.

Bevor im Speicherplatz I3 im zweiten Teilplatz die Information von dem ersten Teilplatz des Speicherplat-

zes I2 eingefügt wird, muß jedoch noch geprüft werden, und zwar zweckmäßig beginnend vom letzten Teilplatz im Speicherplatz I3, ob diese Information nicht eine Wortkette angibt, die bereits über den Speicherplatz I1 im Speicherplatz I3 enthalten ist, denn es sollen ja endgültig unterschiedliche Wortfolgen mit verschiedener Ähnlichkeit zum Sprachsignal ermittelt werden. Daraus ergibt sich, daß in dem Falle, wo eine einzufügende Information für einen Teilplatz eine Wortfolge angibt, die in diesem Speicherplatz an einem der Teilplätze bereits vorhanden ist, eine dieser Informationen unterdrückt werden muß, und zwar diejenige mit der größeren absoluten Unterschiedssumme. Wenn dadurch ein Teilplatz im Speicherplatz I3 frei wird, kann es möglich sein, daß in diesen freien Teilplatz die einzufügende Information eingeschrieben wird, wenn sich dies aufgrund der Unterschiedsummen der übrigen Teilplätze und des einzufügenden Teilplatzes ergibt. In diesem Falle ist kein Verschieben von im Speicherplatz I3 bereits vorhandenen Teilplätzen beim Einfügen eines neuen Teilplatzes erforderlich.

Um festzustellen, ob eine mit der einzufügenden Wortfolge übereinstimmende Wortfolge bereits im Speicherplatz I3 vorhanden ist, müßte zunächst geprüft werden, ob der vom Speicherplatz I2 ausgehende Übergang bereits in der dritten Stelle eines der Teilplätze im Speicher I3 enthalten ist, und wenn dies der Fall ist, müssen die entsprechenden vorhergehenden Folgen von Übergängen zurückverfolgt werden, bis feststeht, ob diese Folgen von Übergängen an wenigstens einer Stelle unterschiedlich sind oder bis zum Anfang zurückgehend übereinstimmen.

Dieses etwas aufwendige Zurückverfolgen kann vermieden werden, wenn an der dritten Stelle jedes Teilplatzes nicht die Ordnungsnummer des zuletzt beendeten Überganges, sondern eine Adresse eines zusätzlichen Wortfolgenspeichers gespeichert wird, in den bei jedem Ende eines Übergangs ein Hinweis auf die bis zu einschließlich diesem Übergang durchlaufene Übergangsfolge an einem neuen Speicherplatz gespeichert wird, sofern diese Wortfolge nicht bereits in diesem Speicher enthalten ist. Dies hat gleichzeitig noch den Vorteil, daß am Ende des Sprachsignals aus dem dabei eingeschriebenen letzten Speicherplatz des Speichers I4 aus den dritten Stellen unmittelbar über diesen zusätzlichen Wortfolgenspeicher die einzelnen ermittelten Wortfolgen entsprechend ihrer abnehmenden Ähnlichkeit mit dem Sprachsignal ausgegeben werden können.

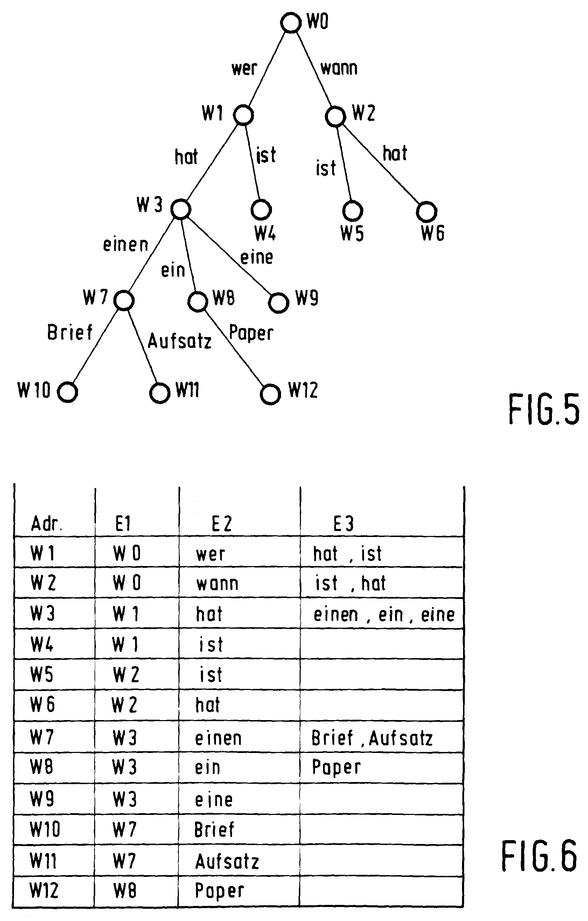

Eine Möglichkeit für den Aufbau dieses Wortfolgenspeichers soll etwas näher anhand der Fig. 5 und 6 erläutert werden. In Fig. 5 sind beispielsweise einige Wortfolgen angedeutet, die bei der fortschreitenden Erkennung eines Sprachsignals entstehen, wobei zur Vereinfachung nur einige Wortfolgen weiterverfolgt werden. Die Kreise W1 bis W2 geben dabei die Enden von einzelnen Wörtern an und stellen Adressen eines Wortfolgenspeichers dar, dessen Inhalt in Fig. 6 angedeutet ist.

Beginnend mit einem Startpunkt W0, bei dem also noch kein Wort beendet ist, werden, beispielsweise vorgegeben durch ein Sprachmodell, u.a. die beiden Wörter "who" und "when" mit dem Sprachsignal verglichen. Wenn das Wort "who" beendet ist, wird unter der Adresse W1 ein Eintrag in dem Wortfolgespeicher gemäß Figur 6 abgelegt, der aus dem Teil E1 mit dem Rückverweis auf W0 und aus dem Teil E2 mit dem Übergang "who" besteht. Der Teil E3 ist zunächst noch leer. Wenn das Wort "when" beendet ist, beispielsweise zu einem etwas anderen Zeitpunkt, d.h. bei einem anderen Testsignal, wird unter der Adresse W2 ein weiterer Eintrag in dem Wortfolgespeicher in Figur 6 abgelegt, wobei im Teil E1 der Rückverweis ebenfalls auf den Startpunkt W0 zeigt und der Teil E2 den Übergang "when" enthält.

Es wird nun ein Vergleich mit u.a. den Wörtern "has" und "was" durchgeführt. Wenn das Wort "has", das vom Punkt W1 ausgeht, als nächstes das Ende erreicht, wird ein neuer Eintrag im Wortfolgespeicher unter der Adresse W3 abgelegt, der im Teil E1 den Rückverweis auf W1 enthält und im Teil E2 den Übergang "has". Gleichzeitig wird unter der Adresse W1 im Teil E3 der Übergang "has" als von dem Punkt W1 ausgehender Übergang eingetragen. Wenn dann das Wort "was" vom Punkt W1 ausgehend endet, wird unter dieser Adresse W1 geprüft, ob in Abschnitt E3 dieser Übergang bereits enthalten ist. Da angenommen wird, daß dies noch nicht der Fall war, wird unter der Adresse W4 ein Eintrag in dem Wortfolgespeicher abgelegt, der im Teil E1 den Rückverweis auf W1 und im Teil E2 den Übergang "was" enthält. Außerdem wird unter der Adresse WI der Eintrag im Abschnitt E3 um diesen Übergang "was" ergänzt. Auf gleiche Weise werden die neuen Adressen W5 und W6 angelegt, wenn die vom Punkt W2 ausgehenden Wörter "was" bzw. "has" enden, wobei an der Adresse W2 im Abschnitt E3 ebenfalls die entsprechenden Wörter ergänzt werden.

Vom Punkt W3 ausgehend werden nun u.a. die Wörter "written" und "mailed" verglichen. Die von den Punkten W4 bis W6 tatsächlich ebenfalls weitergehenden Wörter werder hier der Einfachheit nicht weiter betrachtet. Wenn das Wort "written" endet, wird wieder ein neuer Eintrag W7 im Wortfolgespeicher angelegt, der im Teil E1 als Rückverweis auf W3 zeigt und im Teil E2 den Übergang "written" enthält. Dieses Wort wird auch an der Adresse W3 im Abschnitt E3 ergänzt. Entsprechendes gilt auch für das andere Wort "mailed", das den Eintrag unter der Adresse W8 erzeugt, und entsprechend die weiteren Wörter, die Einträge unter den Adressen W9, W10, W11 und W12 erzeugen. Entsprechend werden jeweils die Abschnitte E3 bei der vorher Adresse ergänzt.

Wenn nun beispielsweise vom Punkt W1 ausgehend über einen anderen Weg das Wort "has" zu einem späteren Zeitpunkt beendet wird, kann über die Ausgangsadresse W1 aus dem Eintrag E3 sofort festgestellt werden, daß diese Wortfolge bereits existiert.

Am Ende des Sprachsignals können nun aus dem letzten Speicherplatz im dritten Speicher 14 über die an den dritten Stellen aller Teilplätze enthaltenen Adressen des Wortfolgenspeichers aus dem zweiten Teil E2 darin das jeweils letzte Wort sowie das vorhergehende Ende der Wortkette und darüber das vorhergehende Wort usw. ermittelt und als Wortfolge ausgegeben werden.

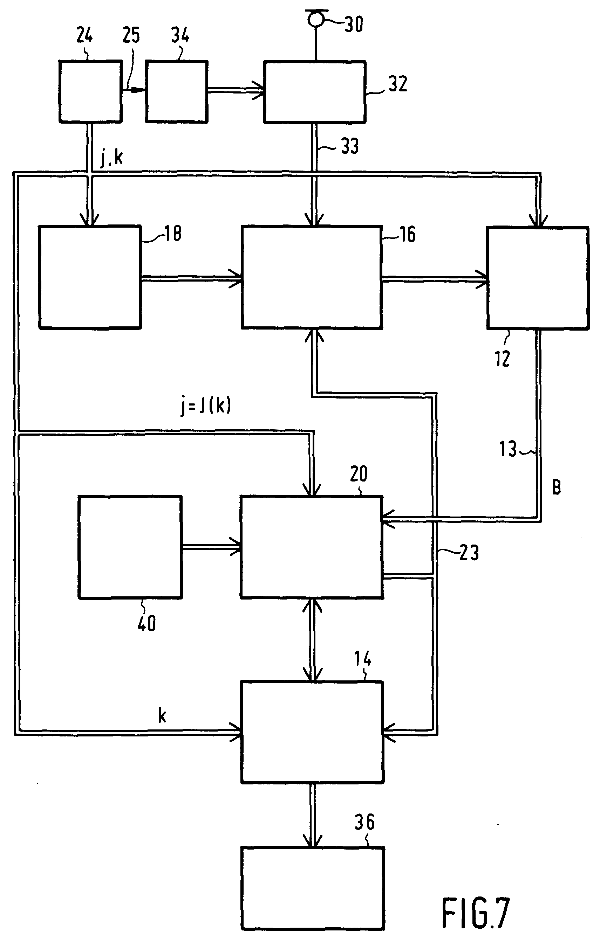

In dem Blockschaltbild in Fig. 7 wird das zu erkennende Sprachsignal einem Mikrofon 30 zugeführt und in ein elektrisches Signal umgewandelt, das einer SprachsignalVerarbeitungsanordnung 32 zugeführt wird. Darin werden aus dem Sprachsignal charakteristische Testsignale abgeleitet, beispielsweise die Amplituden des Sprachsignals über kurze aufeinanderfolgende Zeitabschnitte von beispielsweise ms in einer Anzahl aneinandergrenzender Spektralbereiche, und diese Testsignale werden zweckmäßig zwischengespeichert, da bei einem größeren Vokabular eine Echtzeit-Verarbeitung allgemein nicht möglich ist. Die Adressierung dieses nicht dargestellten Zwischenspeichers erfolgt durch einen Adressengenerator 34.

Die Testsignale werden danach über die Verbindung 33 einer Vergleichsanordnung 16 zugeführt, die gleichzeitig Referenzsignale aus einem Referenzspeicher 18 erhält. Dieser Referenzspeicher 18 wird von einem Adressengenerator 24 angesteuert, der nacheinander alle Referenzsignale oder, falls Schwellwerte verwendet werden, bestimmte der im Referenzspeicher 18 enthaltenen Referenzsignale ausliest. Wenn alle in Frage kommenden Referenzwerte einmal der Vergleichsanordnung 16 zugeführt worden sind, gibt der Adressengenerator 24 über die Verbindung 25 ein Signal an den Adressengenerator 34 ab, so daß dann das nächste Testsignal der vergleichsanordnung 16 zugeführt wird.

Diese letztere vergleicht jedes Testsignal mit den zugeführten Referenzsignalen und bildet für jedes zugeführte Referenzsignal einen Unterschiedswert, und nach den Regeln der dynamischen Programmierung, wie beispielsweise aus der DE-OS 32 15 868 bekannt, werden daraus Unterschiedsummen gebildet und in einem Speicher 12 abgespeichert, der ebenfalls von dem Adressengenerator 24 adressiert wird. Darin wird ferner an jeder Adresse ein Rückwärtszeiger gespeichert, der angibt, an welcher Stelle bzw. bei welchem Signal eine das betreffende Wort durchlauf ende Folge von Unterschiedsignalen in diesem Wort begonnen hat.

Jeweils am Ende eines Wortes, wenn also der Adressengenerator 24 das letzte Referenzsignal j=J(k) des Wortes k adressiert, wird eine Verarbeitungsanordnung 20 angesteuert, die aus dem Speicher 12 den an dieser Adresse gespeicherten Rückwärtszeiger B über die Verbindung 13 ausliest und an der diesem Rückwärtszeiger entsprechenden Adresse einen Speicherplatz in dem Speicher 14 ansteuert und den Inhalt des Speicherplatzes über die Verbindung 21 ausliest. Wenn dieses gerade beendete Wort das erste bei dem betreffenden Testsignal beendete Wort oder, falls ein Sprachmodell verwendet wird, das erste Wort einer grammatisch zusammengehörenden Gruppe von Wörtern ist, was die Verarbeitungsanordnung 20 durch Ansteuerung eines Sprachmodellspeichers 40 feststellt, wird danach der nächste freie Speicherplatz im Speicher 14 über die Verbindung 23 angesteuert und der Inhalt des ausgelesenen Speicherplatzes daran eingeschrieben. Falls das gerade beendete Wort jedoch nicht das erste Wort bei diesem Testsignal war, wird von dem Inhalt des ausgelesenen Speicherplatzes des Speichers 14 jeder Teilplatz geprüft, ob die darin enthaltene, um das momentan durchlaufene Wort erhöhte Unterschiedsumme kleiner ist als die Unterschiedsumme eines Teilplatzes des Speicherplatzes im Speicher 14, der bei diesem Testsignal bei dem ersten beendeten Wort neu eingeschrieben wurde, wofür der Inhalt dieses neu eingeschriebenen Wortes beispielsweise in der Verarbeitungsanordnung 20 noch zunächst gespeichert behalten wurde. Wenn ein solcher Teilplatz gefunden wird, wird dessen Inhalt und der Inhalt der folgenden Teilplätze um einen Teilplatz weitergeschoben, wobei der Inhalt des letzten Teilplatzes wegfällt, und der gerade verglichene Inhalt des einzuschreibenden Teilplatzes wird an den so frei gewordenen Teilplatz eingeschrieben. Dies wird nacheinander mit allen Teilplätzen durchgeführt, bis ein Teilplatz gefunden wird, bei dem die darin gespeicherte und erhöhte Unterschiedsumme größer ist als diejenige des letzten Teilplatzes des zuletzt eingeschriebenen Speicherplatzes. Beim Einschreiben eines neuen Teilplatzes werden selbstverständlich die Inhalte der einzelnen Speicherplätze in der früher beschriebenen Weise aktualisiert, wobei die Nummer k des gerade beendeten Wortes von dem Adressengenerator 24 abgenommen wird.

Anstatt beim ersten beendeten Wort bei einem neuen Testsignal einen neuen Speicherplatz im Speicher 14 zu beschreiben, kann der Inhalt dieses Speicherplatzes zunächst ganz in der Verarbeitungsanordnung 20 zwischengespeichert und mit den bei diesem Testsignal folgenden beendeten Wörtern ergänzt werden, bis alle Referenzsignale aller Wörter des Referenzspeichers 18, zumindest wenn sie beispielsweise, bei Verwendung von Schwellen für die Unterschiedsummen für den Vergleich zugelassen sind, mit dem momentanen Testsignal verglichen worden sind. Mit der dann erhaltenen Information kann dann der neue Speicherplatz im Speicher 14 beschrieben werden. Wesentlich ist, daß in diesem Speicrierplatz die einzelnen Teilplätze in der Reihenfolge ihrer Unterschiedsummen geordnet sind.

In jedem Falle wird die Adresse dieses neu eingeschriebenen Speicherplatzes im Speicher 14 über die Verbindung 23 auch der Vergleichsanordnung 16 zugeführt, die diese Adresse als Rückwärtszeiger B für alle neu beginnenden Wörter in den Speicher 12 einschreibt. Auf diese Weise wird der Speicher 14 nacheinander eingeschrieben, bis das letzte Testsignal des zu erkennenden Sprachsignals verglichen worden ist, und dann wird durch entsprechendes Auslesen des Speichers 14, wie früher beschrieben, durch die Verarbeitungsanordnung 20 die erkannte Wortfolge ausgegeben und einer Ausgabeanordnung 36 zugeführt, beispielsweise einem Drucker oder einem Speicher oder auch einer weiteren Verarbeitungsanordnung für die weitere Verarbeitung des erkannten Satzes.

Es ist klar, daß die Vergleichsanordnung 16 und die Verarbeitungsanordnung 20 gemeinsam durch einen programmierbaren Rechner gebildet sein können, der dann beispielsweise auch die Adressengeneratoren 24 und 34 enthält, und die einzelnen Speicher, insbesondere die beiden Speicher 12 und 14, können auch durch entsprechende Adressenbereiche eines gemeinsamen Speichers gebildet sein.

**Patentansprüche**

1. Verfahren zur Erkennung mindestens einer Wortkette in einem Sprachsignal, aus dem für aufeinanderfolgende Zeitabschnitte charakteristische Testsignale abgeleitet werden, die mit Referenzsignalen einer Anzahl vorgegebener Wörter, die in einem ersten Speicher gespeichert sind, zur Bildung von Unterschiedswerten verglichen werden, die auf summiert werden, wobei die Unterschiedsumme in einem zweiten Speicher zusammen mit einem Hinweis auf die Speicheradresse, bei der die so entstandene Folge von Unterschiedsummen am Anfang eines Wortes begonnen hat, gespeichert wird, und mindestens an Wortgrenzen ein Hinweis auf das gerade beendete Wort und auf die Stelle dessen Beginn in einem dritten Speicher gespeichert wird und am Ende des Sprachsignals ausgehend von mindestens dem Wort, bei dem die kleinste Unterschiedsumme erreicht worden ist, über den dabei gespeicherten Anfang dieses Wortes aus dem dort gespeicherten Hinweis auf das vorhergehende Wort und auf dessen Anfang usw. mindestens eine Wortkette ermittelt wird,
<u>dadurch gekennzeichnet</u>,

daß zum Erkennen von N unterschiedlichen Wortketten mit größter Ähnlichkeit zum Sprachsignal der dritte Speicher eine Anzahl Speicherplätze mit je mindestens N Teilplätzen enthält, von denen jeder Teilplatz eine erste Stelle für eine Adresse des dritten Speichers, eine zweite Stelle für eine Adresse eines Teilplatzes innerhalb des Speicherplatzes, eine dritte Stelle für eine Angabe eines Wortes und eine vierte Stelle für eine Angabe einer Unterschiedsumme enthält, wobei die Adressen in den ersten beiden Stellen den Hinweis auf den Anfang eines Wortes darstellen,
daß für jede Gruppe von Wörtern, von denen mindestens ein Wort bei einem Testsignal das Wortende erreicht, ein neuer Speicherplatz im dritten Speicher adressiert wird, dessen Adresse als Hinweis auf den Anfang jedes möglichen folgenden Wortes bei dessen erstem Referenzsignal im zweiten Speicher gespeichert wird und dessen in die Teilplätze einzuschreibenden Informationen aus Speicherplätzen abgeleitet werden, deren Adressen im zweiten Speicher für diejenigen ersten Wörter gespeichert sind, die beim letzten Testsignal gemeinsam das Ende erreicht haben und die zur selben Gruppe von Wörtern gehören, indem von diesen Teilplätzen nur diejenigen verwendet werden, bei denen die darin gespeicherte Unterschiedsumme, erhöht um den Zuwachs der Unterschiedsumme durch den Vergleich der Referenzsignale des jeweiligen ersten Wortes, am kleinsten ist und die bis dahin durchlaufene Folge von früheren Wörtern einschließlich des momentanen Wortes unterschiedlich ist, bis alle Teilplätze des neuen Speicherplatzes eingeschrieben sind, wobei beim Ableiten der Information für jeweils einen Teilplatz in die erste Stelle die Adresse des Speicherplatzes, aus deren Teilplatz Informationen abgeleitet werden, in die zweite Stelle die Angabe des Teilplatzes, aus dem Information abgeleitet werden, in die dritte Stelle eine Angabe des betreffenden, gerade beendeten ersten Wortes, in die vierte Stelle eine Angabe für die erhöhte Unterschiedsumme eingeschrieben wird,
und daß aus dem Inhalt aller Teilplätze des Speicherplatzes, der beim letzten Testsignal des Sprachsignals eingeschrieben worden ist, die verschiedenen Wortketten über die Angabe des Wortes in der dritten Stelle sowie die in den ersten und zweiten Stellen dieser Teilplätze enthaltenen Adressen von Speicherplätzen und dem Inhalt von deren Teilplätzen usw. ermittelt und ausgegeben werden.

2. Verfahren nach Anspruch 1,
<u>dadurch gekennzeichnet</u>, daß an der vierten Stelle des ersten Teilplatzes jedes Speicherplatzes der Absolutwert der Unterschiedsumme und an der vierten Stelle aller folgenden Teilplätze die Differenz derunterschiedsumme an diesem Teilplatz zu der Unterschiedsumme des ersten Teilplatzes gespeichert ist.

3. Verfahren nach Anspruch 1 oder 2,
<u>dadurch gekennzeichnet</u>,

- daß von einem der Wörter, die beim selben Testsignal das Ende erreichen, aus den Informationen des Speicherplatzes, dessen Adresse mit der Unterschiedsumme dieses Wortes gespeichert ist, weitere Informationen abgeleitet und in einem Speicherplatz mit einer neuen Adresse im dritten Speicher gespeichert werden, und

- daß die Information des entsprechenden Speicherplatzes jedes anderen dieser Wörter je Teilplatz nacheinander mit der Information aller Teilplätze des neuen Speicherplatzes verglichen wird und,

wenn zwei miteinander verglichene Teilplätze dieselbe bisher durchlaufene Wortfolge angeben, die Information des Teilplatzes mit der größeren Unterschiedsumme unterdrückt wird und die nicht unterdrückte Information des gerade verglichenen Teilplatzes eines Wortes zwischen solche zwei Teilplätze des neuen Speicherplatzes eingefügt wird, deren Unterschiedsumme größer bzw. kleiner als die Unterschiedsumme des verglichenen Teilplatzes ist, wobei gegebenenfalls die Informationen der Teilplätze des neuen Speicherplatzes um einen Teilplatz verschoben werden.

4. Verfahren nach einem der Ansprüche 1 bis 3, <u>dadurch gekennzeichnet,</u>

- daß in einen vierten Speicher bei jedem Einschreibem von Informationen in einen Teilplatz des dritten Speichers eine Angabe der um das gerade beendete Wort verlängerten bisher durchlaufenen Wortkette an einer neuen Adresse gespeichert wird, die in dem eingefügten Teilplatz an der dritten Stelle anstelle eines Hinweises auf das beendete Wort gespeichert wird, wobei die bisher durchlaufene Wortkette über die Adresse des vierten Speichers, die in dem Teilplatz gespeichert ist, aus dem die Information für den einzufügenden Teilplatz abgeleitet wird, ermittelt wird.

5. Anordnung zum Durchführen des Verfahrens nach einem der Ansprüche 1 bis 4,

mit einer Sprachsignal-Verarbeitungseinrichtung (32) zum Ableiten charakteristischer Testsignale, mit einem ersten Speicher (18) zum Speichern von Referenzsignalen für zu erkennende Wörter, mit einer Vergleichsanordnung (16) zum Vergleichen jedes Testsignals mit Referenzsignalen zum Erzeugen von Unterschiedswerten und zum Erzeugen von Unterschiedsummen aus aufaddierten Unterschiedswerten, mit einem zweiten Speicher (12) zum Aufnehmen von Unterschiedsummen und Hinweisen auf den Anfang der Folge von Unterschiedsummen beim betreffenden Wort, mit einem dritten Speicher (14), der bei Erreichen eines Wortendes den Hinweis auf den Anfang der Folge von Unterschiedsummen und einen Hinweis auf das gerade beendete Wort speichert, <u>dadurch gekennzeichnet,</u> daß der dritte Speicher (14) für jeden bei Erreichen eines Wortendes neu adressierten Speicherplatz mehrere Teilplätze (TP1,TP2,...) mit je vier Speicherstellen (l,n,k,d) aufweist, daß eine Verarbeitungsanordnung (20) vorgesehen ist, die für alle zur gleichen Gruppe von Wörtern gehörenden, beim selben Testsignal (i) endenden Wörter denselben Speicherplatz (l1,l2,l3...) im dritten Speicher (14) adressiert und in die einzelnen Teilplätze Informationen einschreibt, die aus dem ausgelesenen Inhalt der Teilplätze von solchen Speicherplätzen abgeleitet sind, auf deren Speicheradresse der zu dem jeweiligen beendeten Wort gehörige Eintrag (B,j,k)) im zweiten Speicher (12) hinweist, wobei die Verarbeitungsanordnung (20) nur aus solchen Teilplätzen Informationen ableitet, bei denen die darin gespeicherte Unterschiedsumme, erhöht um den Zuwachs der Unterschiedsumme durch den Vergleich der Referenzsignale des jeweiligen ersten Wortes, am kleinsten ist und die bis dahin durchlaufene Folge von früheren Wörtern einschließlich des momentanen Wortes unterschiedlich ist.

## Claims

1. A method of recognizing at least one word string in a speech signal, from which test signals characteristic of consecutive time intervals are derived, which test signals are compared with reference signals of a plurality of given words stored in a first memory in order to form difference values which are summed, the difference sum being stored in a second memory together with a pointer to the memory address where the sequence of difference sums thus obtained has started at the beginning of a word, and at least at word boundaries a pointer to the word just ended and to the point where said word begins being stored in a third memory, and at least one word string being determined at the end of the speech signal, starting from at least that word for which the smallest difference sum has been obtained, via the beginning of this word then stored, from the pointer to the preceding word and to its beginning etc. stored there, <u>characterized in that</u>

for the recognition of N different word strings having the best similarity to the speech signal the third memory comprises a plurality of storage locations each having at least N sub-locations, of which each sub-location comprises a first position for an address of the third memory, a second position for an address of a sub-location within the storage location, a third position for an indication of a word, and a fourth position for an indication of a difference sum, the addresses in the first two positions representing the pointer to the beginning of a word, in that for every group of words, of which at least one word reaches the word end for a test signal, a new storage location in the third memory is addressed, whose address is stored in the second memory as a pointer to the beginning of every possible subsequent word upon the first reference signal thereof and whose information to be written into the sub-locations is derived from storage locations whose addresses are stored in the second memory for those first words which have concurrently reached the end for the last test signal and which belong to the same group of words, in that of said sub-locations only those sub-locations are used for which the difference sum stored therein, incremented by the increase of the difference sum through the comparison of the reference signals of the relevant first word, is smallest and the sequence of prior words, including the instantaneous word, traversed until then is different, until all the sub-locations of the new storage location are filled, upon deriving of the information for each time one sub-location the address of the storage location, from whose sub-location information is derived, is written into the first position, the pointer to the sub-location, from which the information is derived, is written into the second position, an indication of the relevant first word just ended is written into the third position, and an indication of the incremented difference sum is written into the fourth position,
and in that from the content of all the sub-locations of the storage location, which has been entered during the last test signal of the speech signal, the different word strings are determined and output via the indication of the word in the third position, as well as the addresses of storage location contained in the first and the second positions of said sub-locations and the content of their sub-locations etc.

2. A method as claimed in Claim 1, characterized in that the absolute value of the difference sum is stored at the fourth position of the first sub-location of every storage location and the difference between the difference sum at this sub-location and the difference sum of the first sub-location is stored at the fourth position of every subsequent sub-location.

3. A method as claimed in Claim 1 or 2,
<u>characterized in that</u>

- from one of the words reaching the end for the same test signal further information is derived from the information of the storage location whose address has been stored together with the difference sum of said word, which further information is stored at a storage location having a new address in the third memory, and

- the information of the relevant storage location of every other one of these words for each sub-location is compared successively with the information of all the sub-locations of the new storage location and,

if two compared sub-locations indicate the same word sequence traversed so far, the information of the sub-location with the larger difference sum is suppressed, and the non-suppressed information of the just compared sub-location of a word is inserted between those two sub-locations of the new storage location whose difference sum is larger or smaller than the difference sum of the compared sub-location, the information of the sub-locations of the new storage location being shifted by one sub-location, if necessary.

4. A method as claimed in any one of the Claims 1 to 3,
<u>characterized in that</u>

- each time that information is written into a sub-location of the third memory, an indication of the word string traversed so far and extended by the word just ended is stored at a new address in a fourth memory, which new address is stored in the inserted sub-location at the third position instead of an indication of the ended word, the word string traversed so far being determined via the address of the fourth memory, being stored at the sub-location from which the information for the sub-location to be inserted is derived.

5. An arrangement for carrying out the method as claimed in any one of the Claims 1 to 4, comprising a speech signal processing device (32) for deriving characteristic test signals, comprising a first memory (18) for storing reference signals for words to be recognized, a comparison arrangement (16) for comparing each test signal with reference signals in order to form difference values and to form difference sums from added difference values, a second memory (12) for storing difference sums and indications of the beginning of the sequence of difference sums for the relevant word, a third memory (14) which, when a word end is reached, stores the pointer to the beginning of the sequence of difference sums and a pointer to the word just ended,
<u>characterized in that</u>

for every storage location which is newly addressed when a word end is reached the third memory (14) comprises a plurality of sub-locations (TP1, TP2, .... ) each having four storage positions (l, n, k, d),

that there is provided a processing arrangement (20) which, for all the words belonging to the same group of words and ending at the same test signal (i), addresses the same storage location (l1, l2, l3 ....) in the third memory (14) and writes into the individual sub-locations information derived from the read-out content of the sub-locations of such storage locations whose storage address is indicated by the entry (B, j, k) corresponding to the relevant ended word in the second memory (12), the processing arrangement (20) deriving information only from those sub-locations for which the difference sum stored therein, incremented by the increase of the difference sum as a result of the comparison of the reference signals of the relevant first word, is smallest and for which the sequence of prior words traversed so far, including the instantaneous word, is different.

## Revendications

1. Procédé pour la reconnaissance d'au moins une suite de mots dans un signal de parole duquel sont dérivés des signaux de test caractéristiques de segments temporels successifs qui sont comparés avec des signaux de référence d'un nombre de mots prédéterminés sauvés dans une première mémoire en vue de former des valeurs différentielles qui sont additionnées, la somme des différences étant sauvée dans une deuxième mémoire avec une indication sur l'adresse de mémoire, la séquence ainsi obtenue de sommes de différences ayant commencé au début d'un mot et, au moins aux limites des mots, une indication sur le mot qui vient de se terminer et la position de son début étant sauvée dans une troisième mémoire et une suite de mots étant déterminée à la fin du signal de parole à partir d'au moins le mot auquel la plus petite somme de différences a été atteinte, en passant par le début de ce mot sauvé à cette occasion à partir de l'indication sauvée à cette occasion sur le mot précédent et son début, etc.,

caractérisé en ce que

pour la reconnaissance de N séquences différentes de mots avec une similitude maximale par rapport au signal de parole, la troisième mémoire contient un nombre d'emplacements de mémoire comportant respectivement au moins N emplacements partiels dont chaque emplacement partiel contient une première position pour une adresse de la troisième mémoire, une deuxième position pour une adresse d'un emplacement partiel au sein de l'emplacement de mémoire, une troisième position pour une indication d'un mot et une quatrième position pour une indication d'une somme de différences, les adresses dans les deux premières positions représentant l'indication sur le début d'un mot,

que, pour chaque groupe de mots dont au moins un mot atteint la fin de mot en cas de signal de test, un nouvel emplacement de mémoire est adressé dans la troisième mémoire, dont l'adresse est sauvée en tant qu'indication du début de tout mot éventuel suivant lors de son premier signal de référence dans la deuxième mémoire et dont les informations à enregistrer dans les emplacements partiels sont dérivés d'emplacements de mémoire dont les adresses sont sauvées dans la deuxième mémoire pour les premiers mots qui ont atteint ensemble la fin lors du dernier signal de test et qui font partie du même groupe de mots puisque, parmi ces emplacements partiels, sont seuls utilisés ceux pour lesquels la somme de différences qui y est sauvée, majorée de l'accroissement de la somme de différences par la comparaison des signaux de référence du premier mot respectif est minimale et la séquence parcourue jusqu'à présent des mots précédents jusqu'au mot instantané inclus est différente jusqu'à ce que tous les emplacements partiels du nouvel emplacement de mémoire soient enregistrés, l'adresse de l'emplacement de mémoire de l'emplacement partiel duquel les informations sont dérivées étant sauvée en première position, l'indication de l'emplacement partiel dont les informations sont dérivées en deuxième position, une indication du premier mot correspondant qui vient de se terminer en troisième position et une indication de la somme de différences majorée en quatrième position lors de la dérivation des informations pour respectivement un emplacement partiel, et

qu'à partir du contenu de tous les emplacements partiels de l'emplacement de mémoire qui a été enregistré lors du dernier signal de test du signal de parole, les différentes suites de mots sont déterminées et sorties par l'indication du mot dans la troisième position ainsi que les adresses des emplacements de mémoire contenues dans les première et deuxième positions et le contenu de leurs emplacements partiels.

2. Procédé selon la revendication 1,

caractérisé en ce que la valeur absolue de la somme de différences est sauvée à la quatrième position du premier emplacement partiel de chaque emplacement de mémoire et la différence entre la somme de différences à cet emplacement partiel et la somme de différence du premier emplacement partiel est sauvée à la quatrième position de tous les emplacements partiels suivants.

3. Procédé selon l'une des revendications 1 ou 2, caractérisé en ce que

- d'autres informations sont dérivées d'un des mots qui atteignent la fin pour le même signal de test à partir des informations de l'emplacement de mémoire dont l'adresse est sauvée avec la somme de différences de ce mot et sont sauvées dans un emplacement de mémoire avec une nouvelle adresse dans la troisième mémoire, et

- l'information de l'emplacement de mémoire correspondant de chaque autre de ces mots de l'emplacement partiel respectif est successivement comparée avec l'information de tous les emplacements partiels du nouvel emplacement de mémoire, et

lorsque deux emplacements partiels comparés l'un à l'autre indiquent la même séquence de mots parcourue jusqu'à présent, l'information de l'emplacement partiel avec la somme de différences la plus élevée est supprimée,

et l'information non supprimée de l'emplacement partiel d'un mot qui vient d'être comparé est insérée entre ces deux emplacements partiels du nouvel emplacement de mémoire dont la somme de différences est respectivement supérieure ou inférieure à la somme de différences de l'emplacement partiel comparé, les informations des emplacements partiels du nouvel emplacement de mémoire étant éventuellement décalées d'un emplacement partiel.

4. Procédé selon l'une des revendications 1 à 3, caractérisé en ce que

- dans une quatrième mémoire, une indication de la suite de mots parcourue jusqu'à présent et allongée du mot qui vient de se terminer est sauvée à une nouvelle adresse qui est sauvée dans l'emplacement partiel inséré à la troisième position à la place d'une indication sur le mot terminé à chaque enregistrement d'informations dans un emplacement partiel de la troisième mémoire, la suite de mots parcourue jusqu'à présent sur l'adresse de la quatrième mémoire qui est sauvée dans l'emplacement partiel dont est dérivée l'information pour l'emplacement partiel à insérer étant déterminée.

5. Dispositif d'exécution du procédé selon l'une des revendications 1 à 4,

avec un dispositif de traitement du signal de parole (32) pour la dérivation de signaux de test caractéristiques avec une première mémoire (18) pour sauver des signaux de référence pour les mots à reconnaître, avec un comparateur (16) pour la comparaison de chaque signal de test avec les signaux de référence en vue de la production de valeurs différentielles et de la production de sommes de différences à partir des valeurs différentielles additionnées, avec une deuxième mémoire (12) en vue de l'enregistrement de sommes de différences et des indications sur le début de la séquence de sommes de différences en cas de mot correspondant,

avec une troisième mémoire (14) qui sauve, lorsqu'une fin de mot est atteinte, l'indication sur le début de la séquence de sommes de différences et une indication sur le mot qui vient de se terminer,

caractérisé en ce que

la troisième mémoire (14) présente plusieurs emplacements partiels (TP1, TP2, etc.) avec respectivement quatre positions de mémoire (l, n,k,d) pour chaque emplacement de mémoire nouvellement adressé lorsqu'une fin de mot est atteinte,

qu'un dispositif de traitement (20) est prévu et adresse le même emplacement de mémoire (l1,l2,l3,...) dans la troisième mémoire (14) pour tous les mots se terminant au même signal de test (i) et appartenant au même groupe de mots et enregistre dans les emplacements partiels individuels des informations qui sont dérivées du contenu lu des emplacements partiels de tels emplacements de mémoire dont l'adresse de mémoire est indiquée par l'entrée (B,j,k) correspondant au mot qui vient respectivement de se terminer dans la deuxième mémoire (12), le dispositif de traitement (20) ne dérivant de tels emplacements partiels que des informations pour lesquelles la somme de différences qui y est sauvée, majorée de l'accroissement de la somme de différences par la comparaison des signaux de référence du premier mot respectif est minimale et la séquence de mots précédents, y compris le mot instantané, parcourue jusqu'à présent est différente.

FIG.1

# FIG.2a

# FIG.2b

# FIG. 3

# FIG.4

FIG.5

| Adr. | E1 | E2 | E3 |
|------|------|--------|------------------|
| W 1 | W 0 | wer | hat , ist |
| W 2 | W 0 | wann | ist , hat |
| W 3 | W 1 | hat | einen , ein , eine |
| W 4 | W 1 | ist | |
| W 5 | W 2 | ist | |
| W 6 | W 2 | hat | |
| W 7 | W 3 | einen | Brief , Aufsatz |
| W 8 | W 3 | ein | Paper |
| W 9 | W 3 | eine | |
| W 10 | W 7 | Brief | |
| W 11 | W 7 | Aufsatz | |
| W 12 | W 8 | Paper | |

FIG.6

18

FIG.7